# EUROPÄISCHE PATENTSCHRIFT

(11) **EP 1 242 237 B1**
(45) Veröffentlichungstag und Bekanntmachung des Hinweises auf die Patenterteilung: **18.02.2004**
(21) Anmeldenummer: 00971196.1
(22) Anmeldetag: 03.11.2000
(51) Int. Cl.: B32B 3/02, B32B 27/00

(54) **MEHRSCHICHTIGER VORFORMLING UND VERFAHREN ZUR HERSTELLUNG DESSELBEN**
MULTI-LAYERED PREFORM AND METHOD FOR PRODUCING THE SAME
EBAUCHE STRATIFIEE ET SON PROCEDE DE PRODUCTION

(30) Priorität: 05.11.1999 CH 202799
(43) Veröffentlichungstag der Anmeldung: 25.09.2002
(73) Patentinhaber: Otto Hofstetter AG, 8730 Uznach (CH)
(72) Erfinder: HOFSTETTER, Otto, CH-8730 Uznach (CH); FERNANDEZ, Luis, CH-8730 Uznach (CH)
(74) Vertreter: Felber, Josef
(86) Internationale Anmeldenummer: PCT/CH2000/000589
(87) Internationale Veröffentlichungsnummer: WO 2001/034378

(56) Entgegenhaltungen:
- EP-A- 0 161 625
- EP-A- 0 354 255
- EP-A- 0 596 872

## Beschreibung

Die Erfindung betrifft, einen mehrschichtigen Vorformling gemäss dem Oberbegriff von Anspruch 1. Die Erfindung betrifft weiter ein Verfahren zur Herstellung eines mehrschichtigen Vorformlings gemäss dem Oberbegriff von Anspruch 8.

Mehrschichtige Vorformlinge bestehend aus PET oder weiteren thermoplastisch formbaren Materialien wie PEN, Polyamid, Polycarbonat usw. sind allgemein bekannt und dienen der Herstellung von Behältern, insbesondere Getränkeflaschen, wobei die Vorformlinge durch Streckblasen in die gewünschte Form gebracht werden. Ein derartiges Verfahren ist beispielsweise aus der Druckschrift WO 99/22926 bekannt. Dieses bekannte Verfahren ermöglicht die Herstellung von mehrschichtigen Vorformlingen mit relativ dünnen Schichten, insbesondere einer dünnen Hautschicht und/oder einer dünnen Sperrschicht. Eine dünne Hautschicht wird angestrebt, um den Anteil der Kern- oder Innenschicht aus kostengünstigem Rezyklat, möglichst gross werden zu lassen. Eine dünne Sperrschicht wird angestrebt, da der hierzu verwendete Kunststoff, beispielsweise PEN, Nylon oder EVOH, relativ teuer ist. Nachteilig an einem mit diesem Verfahren hergestellten Vorformling ist die Tatsache, dass sich die Dicke der Innenschicht, insbesondere im Bodenbereich, nicht variieren lässt. Beim Streckblasen des Vorformlings in die endgülige Behälterform, beispielsweise eine Getränkeflasche, erfährt die Seitenwand eine ausgeprägte bi-axiale Streckung, wogegen derjenige Abschnitt des Vorformlings, welcher den Bodenbereich der Getränkeflasche bildet, während den Streckblasen eine geringere Streckung und daher eine geringere Reduktion seiner Schichtdicke erfährt, sodass die einzelnen Schichten im Bodenbereich relativ dick bleiben.

Aus der Druckschrift EP 0 596 872 A2 ist ein sogenannter Drei-Fünf-Schichten Vorformling bekannt, bei welchem an dem den Bodenbereich der Getränkeflasche bildenden Abschnitt ein zusätzliches Material zugeführt ist derart, dass das die Sperrschicht bildende Material im Bodenbereich mit diesem zusätzlichen Material gefüllt ist. Nachteilig an diesem bekannten Vorformling ist die Tatsache, dass im Bodenbereich immer noch relativ viel Innenmaterial vorliegt, welches, wie bereits erwähnt, vergleichsweise teuer ist. Eine Verminderung des Verbrauchs an Innen- oder Sperrschichtmaterial ist deshalb zur Kosteneinsparung erforderlich. An dem bekannten Vorformling ist weiter die Tatsache nachteilig, dass durch das Einbringen eines zusätzlichen Materials in die Innen- bzw. Sperrschicht, der Herstellungsprozess langsamer, aufwendiger und teuer wird.

Darüberhinaus zeigt es sich, dass zwischen den einzelnen Schichten in aller Regel keine oder eine nur ungenügende Haftung vorliegt. Es liegt in der Natur der verwendeten Kunststoffe, dass sich diese nicht oder nur sehr schlecht mischen und deshalb keine stoffschlüssige Verbindung miteinander eingehen. Diese mangelnde Haftung zwischen den einzelnen Schichten kann beim Streckblasen zu Störstellen respektive Schwachstellen führen, die bei der normalen Verwendung der abgefüllten Kunststoffflaschen im Alltag zu Schäden oder Unfällen führen können.

Es ist Aufgabe der vorliegenden Erfindung einen wirtschaftlich vorteilhafteren Vorformling und ein entsprechendes Verfahren zur Herstellung desselben zu schaffen.

Es ist darüberhinaus Aufgabe der vorliegenden Erfindung, einen Vorformling zu schaffen, bei welchem die Haftung zwischen einzelnen Schichten, vorzugsweise im Bodenbereich, verbessert ist.

Insbesondere ist es Aufgabe der vorliegenden Erfindung, ein Verfahren zu schaffen, welches zu einer besseren Verankerung/Haftung zwischen Sperrschicht und A-Komponente im Bodenbereich führt.

Diese Aufgabe wird gelöst mit einem mehrschichtigen Vorformling mit den Merkmalen von Anspruch 1. Die Unteransprüche 2 bis 7 beziehen sich auf weitere, vorteilhaft ausgestaltete Vorformlinge. Die Aufgabe wird weiter gelöst mit einem Verfahren zum Herstellen eines mehrschichtigen Vorformlings gemäss Anspruch 8.

Die Aufgabe wird insbesondere gelöst mit einem mehrschichtigen Vorformling bestehend aus zumindest zwei Komponenten, einer A-Komponente sowie einer B-Komponente, wobei zumindest eine der Schichten im Bodenbereich des Vorformlings einen Abschnitt aufweist, entlang welchem ein Teil der Schicht abgeschält ist und im Übergangsbereich ein Teil der Schicht, unter Ausbildung einer Teilschicht, abgesplittet ist. Im Mantelbereich ist diese eine Schicht ungesplittet.

In einer vorteilhaften Ausgestaltung besteht die B-Komponente aus dem Innen- bzw. Sperrschichtmaterial, wobei vorzugsweise der ungefähr den Bodenbereich der Getränkeflasche bildende Abschnitt des Vorformlings eine aufgetrennte/gesplittete Schicht aufweist, d.h. eine gelöste Teilschicht zeigt. Ein derartig gestalteter Vorformling weist eine sehr dünne Innen- respektive Sperrmaterialschicht im Bodenbereich auf. Darüberhinaus kann die gelöste Teilschicht sehr dünn sein, d.h. beispielsweise eine Dicke von 50µm und 500µm aufweisen. Erfindungsgemäss ist diese Teilschicht unregelmässig geformt, insbesondere zeigt diese Teilschicht eine krausartig gewellte Form. Diese unregelmässige geometrische Form der Teilschicht führt dazu, dass zwischen dieser dünnen Teilschicht und den benachbart liegenden Schichten eine grössere Kontaktfläche entsteht und dadurch die Adhäsionskräfte zwischen den einzelnen Schichten erhöht werden. Die unregelmässige Form dieser Teilschicht führt ausserdem zu einer mechanischen Verankerung, d.h. einer formschlüssigen Verbindung zwischen den einzelnen Schichten.

Bei der erfindungsgemässen Ausgestaltungsform ist die Innenschicht im Bodenbereich abgetragen, sodass sich im Bodenbereich nur sehr wenig Sperrmaterial befindet.

In einer möglichen Ausgestaltungsform besteht die A-Komponente aus Neumaterial-PET, wogegen die B-Komponente aus Sperrmaterial wie Nylon besteht. Es können jedoch auch noch weitere Komponenten, beispielsweise eine C-Komponente bestehend aus aufbereitetem Rezyklat als zusätzliche Schicht des Vorformlings eingebracht werden.

Das erfindungsgemässe Verfahren zur Herstellung des mehrschichtigen Vorformlings kann derart erfolgen, dass in einer Vorphase Material bestehend aus der A-Komponente in den die Form des Vorformlings begrenzenden Formraum in Materialflussrichtung bis zu einer Teilfüllung eingespritzt wird, und in einer anschliessenden Hauptphase begrenzte Mengen der A-Komponente und der B-Komponente eingespritzt werden. Somit erfolgt das Einbringen der für die Sperrschicht vorgesehenen B-Komponente in einem Parallelprozess. Dabei kann die B-Komponente während dem Einspritzvorgang beidseitig von einer Schicht der A-Komponente umgeben sein. Die B-Komponente fliesst zusammen mit der A-Komponente in Materialflussrichtung nach vorne in den Formraum der Spritzgiessform. In einer Schlussphase wird eine begrenzte Menge der A-Komponente unter derartigen Bedingungen in den Hohlraum eingespritzt, dass ein Teil der B-Komponente vom Bodenbereich abgetragen wird und unter Ausbildung einer separaten Teilschicht im Übergangsbereich gesplittet, d.h. abgetrennt bzw. abgeschält wird. Dies wird insbesondere dadurch erreicht, wenn die A-Komponente zugeführt wird bevor die B-Komponente erhärtet ist. Dies bewirkt ein Abtragen und Abschälen der B-Komponente. Die B-Komponente, beispielsweise Nylon, wird während einer kurzen Zeitdauer eingespritzt. Daraufhin wird die A-Komponente sehr rasch nachgeliefert, damit die B-Komponente beim Nachfliessen der A-Komponente noch plastisch ist.

Im Übergangsbereich befindet sich damit zwischen den gesplitteten Schichten bestehend aus der B-Komponente eine Schicht bestehend aus der A-Komponente. Der Vorformling weist somit, bei ansonst dreischichtigem Aufbau, in diesem Übergangsbereich einen fünfschichtigen Aufbau auf. Es ist natürlich auch ein fünf Schichten übersteigender Aufbau möglich.

Es versteht sich, dass für die Schlussphase auch eine dritte Komponente eingebracht werden kann.

Der Übergangsbereich des Vorformlings mit dem fünfschichtigen Aufbau bildet eine Art Verankerungsabschnitt, wobei die abgesplittete Teilschicht der B-Komponente beim Strecken des Vorformlings eine Ankerwirkung ausübt, d.h. wegen seiner unregelmässigen Form eine erhöhte Adhäsion erzeugt und eine formschlüssige Verbindung bildet.

Die derart hergestellten Vorformlingen weisen darüberhinaus eine Innenschicht auf, welche im Mantelbereich eine höhere Dicke aufweisen, was sich wiederum positiv auf die Festigkeit der blasgestreckten Flasche auswirkt.

Dieser gegenseitige Verankerungseffekt weist den Vorteil auf, dass es auch möglich ist, eine Getränkeflasche mit einem sehr dünnen Boden auszubilden, welcher trotzdem eine ununterbrochene Sperrschicht aus Nylon aufweist.

Im folgenden wird die Erfindung anhand mehrerer Ausführungsbeispiele näher beschrieben. Es zeigen:
Fig. 1 einen Längsschnitt durch einen bekannten, mehrschichtigen Vorformling, angeordnet im Formraum einer Spritzgiessform;
Fig. 2 einen Längsschnitt durch eine Heisskanaldüse mit Nadelverschluss;
Fig. 3a eine Teilansicht eines Längsschnittes durch den erfindungsgemässen Vorformling während dem Spritzvorgang;
Fig. 3b eine Teilansicht eines Längsschnittes des Vorformlings während dem Spritzvorgang mit beginnender Abtragung einer Teilschicht;
Fig. 3c eine Teilansicht eines Längsschnittes des fertig erstellten Vorformlings;
Fig. 3d eine Teilansicht eines Längsschnittes eines weiteren, fertig erstellten Vorformlings mit zusätzlicher C-Komponente;
Fig. 5 eine Seitenansicht, teilweise im Schnitt, einer durch Streckblasen hergestellten Getränkeflasche;
Fig. 6 eine Seitenansicht, teilweise im Schnitt, eines Vorformlings; und
Fig. 7 eine Darstellung des fünfschichtigen Aufbaus der Getränkeflasche gemäss Fig. 5.

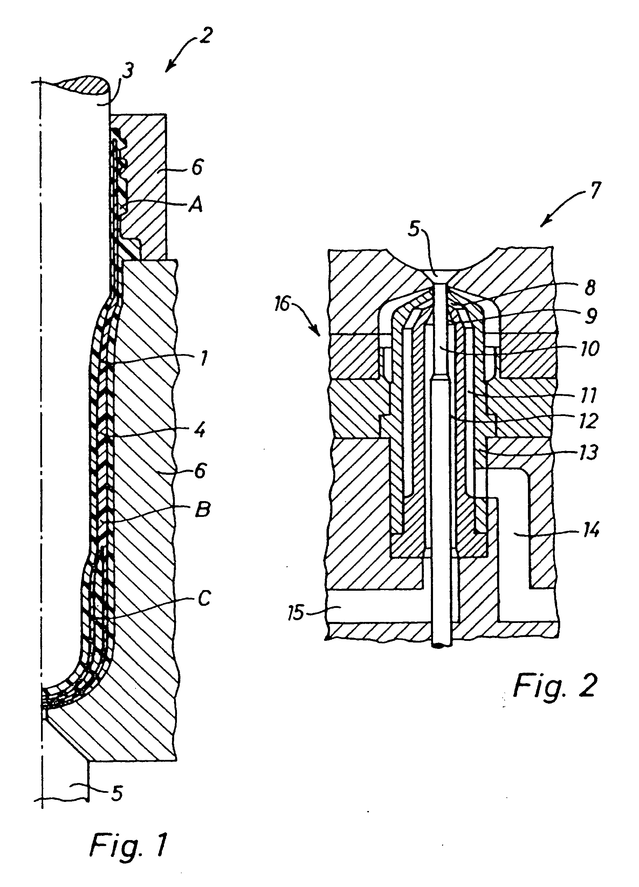

Fig. 1 zeigt einen Längsschnitt der in der Druckschrift EP 0 596 872 A2 offenbarten Spritzgiessform 2, in deren durch den Kern 3 und den Aussenkörper 6 gebildeten Formraum 4 ein Vorformling 1 angeordnet ist. Der erwärmte Thermoplast wird von einer Spritzgiessvorrichtung 7 der Öffnung 5 zugeführt. Der dargestellte Vorformling 1 ist ein sogenannter Drei-Fünf-Schichten Vorformling, da der Vorformling 1 im Halsbereich drei Schichten aufweist, eine Schicht einer B-Komponente, beidseitig umgeben von je einer Schicht einer A-Komponente. Dagegen weist der vorformling 1 im Bodenbereich fünf Schichten auf, wobei die innerste Schicht aus einer C-Komponente besteht, welche beidseitig von der B-Komponente und diese aussenseitig von der A-Komponente umgeben ist.

Die Figur 2 zeigt eine Spritzgiessvorrichtung 7 mit einer Spritzgiessdüse 16, wobei der Öffnung 5 nachfolgend die Spritzgiessform 2 angeordnet ist. In einer bevorzugten Ausführungsform sind 48 oder 96 Spritzgiessformen 2 nebeneinander angeordnet, um pro Arbeitsgang 48 oder 96 Vorformlinge 1 gleichzeitig zu fertigen.

Die Spritzgiessdüse 16 ist so ausgebildet, dass aus einem ersten Behälter eine A-Komponente und aus einem zweiten Behälter eine B-Komponente eines thermoplastischen Kunststoffes durch die Öffnung 5 in den Formraum 4 eingespritzt werden. Dazu weist die Spritzgiessdüse 16 in einem Düsenkörper 13 einen ersten Kanal 11 auf, dem über die Zuleitung 14 die A-Komponente zugeführt wird. Der Kanal 11 umgibt koaxial einen weiteren Kanal 12, welchem über die Zuleitung 15 die B-Komponente zugeführt wird.

Der Kanal 12 weist eine vordere Mündung 9 auf, die in Fliessrichtung F hinter einer Mündung 8 des Kanals 11 angeordnet ist. Eine in Längsrichtung verschiebbare Nadel 10 ragt durch die Mündungen 8 und 9 und verschliesst in der dargestellten Stellung die Öffnung 5. Die Nadel ist zur Freigabe der Öffnung 5 sowie der Mündungen 8 und 9 gesteuert zurückziehbar.

Über die Zuleitung 14 wird die A-Komponente, ein thermoplastischer Kunststoff, insbesondere PET, zugeführt. Über die Zuleitung 15 wird die B-Komponente, ein thermoplastischer Kunststoff, der zur Bildung einer Sperrschicht geeignet ist, zugeführt. Dieser Kunststoff kann beispielsweise PEN, Nylon, EVOH oder ein Polyamid sein. Die Materialien in den Zuleitungen 14 und 15 können auch vertauscht sein.

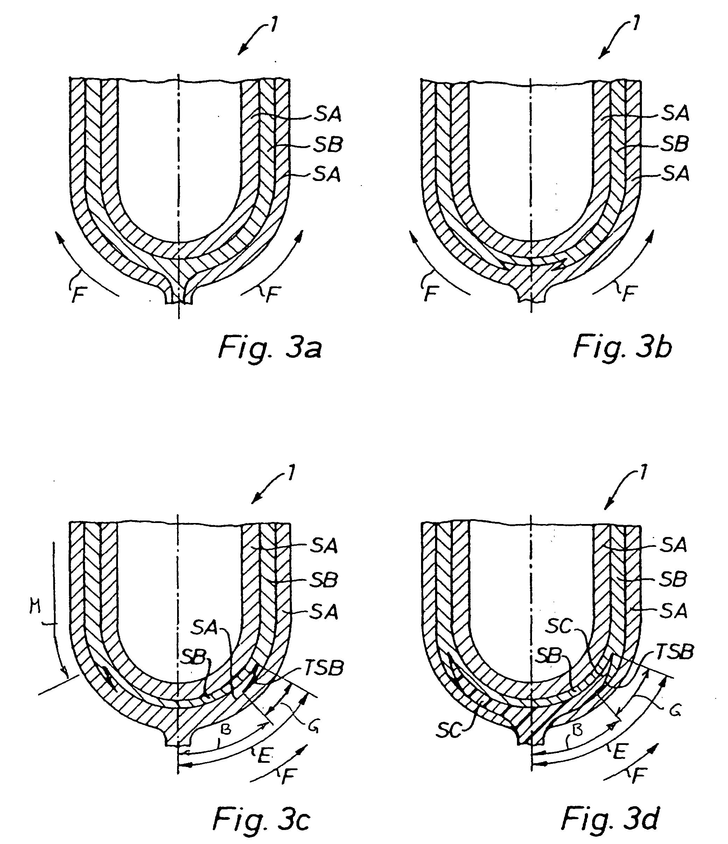

Der Vorformling 1 wird gebildet in dem in einem Schritt des Verfahrens die A-Komponente in begrenzter Menge durch den Kanal 11 in den Formraum 4 eingespritzt wird. Die Nadel 10 ist dabei in teilweise zurückgezogener Position. Dabei wird der Formraum 4 lediglich im Angussbereich mit der A-Komponente gefüllt. In einer Hauptphase wird, wie in Fig. 3a dargestellt, eine begrenzte Menge eines B-Materials in den Formraum 4 gespritzt, wobei dieses Einspritzen parallel mit dem Einspritzen einer weiteren Menge der A-Komponente erfolgen kann. Dabei ist die Nadel 10 soweit zurückgezogen, dass gleichzeitig der Kanal 11 als auch der Kanal 12 zum Formraum 4 hin offen sind. Die A-Komponente wie auch die B-Komponente dringen in Materialflussrichtung F fliessend in den Formraum 4 ein, wobei sich Schichten SA bestehend aus der A-Komponente, und eine Schicht SB bestehend aus der B-Komponente bilden.

In einer Zwischenphase, wie dies in Fig. 3b dargestellt ist, wird der Kanal 12 mit der Nadel 10 geschlossen und weiterhin die A-Komponente über die Zuleitung 14 in den Formraum 4 eingespritzt. Diese A-Komponente wird derart in den Formraum 4 eingespritzt, dass, wie in Fig. 3b dargestellt, ein Teil der Schicht SB abgetragen beziehungsweise abgeschält wird. Dieses Abtragen findet während dem Einspritzen der A-Komponente in den Formraum 4 statt, sodass der Vorformling am Ende den in Fig. 3c dargestellten Aufbau aufweist. Dieser Vorformling 1 weist einen in Materialflussrichtung F verlaufenden Abschnitt E auf, entlang welchem ein Teil der Dicke der Schicht SB unter Ausbildung einer Teilschicht TSB abgesplittet ist, Zwischen der Schicht SB und der Teilschicht TSB befindet sich eine Schicht bestehend aus der A-Komponente. In diesem Bereich weist der Vorformling 1 einen Fünf-Schichten-Aufbau auf.

Fig. 3d zeigt ein weiteres Ausführungsbeispiel eines Vorformlings 1, bei welchem in der Schlussphase an Stelle der A-Komponente eine neue C-Komponente zugeführt wird.

Um das Absplitten einer Teilschicht TSB zu bewirken, muss die A- oder C-Komponente so schnell zugeführt werden, dass die B-Komponente während dem Zuführen der A- oder C-Komponente noch plastisch ist. Zur Erzeugung einer abgesplitteten Teilschicht, muss der gesamte Spritzvorgang in relativ kurzer Zeit ablaufen, beispielsweise innerhalb einer Füllzeit von 3 - 4 Sekunden und ist insbesondere der Zeitpunkt und die Zeitdauer des Einspritzens, das schnelle Schliessen der Nadel 10, der Druck und die Temperatur des eingespritzten thermoplastischen Materials vcn besonderer Bedeutung.

Ein Fachmann ist mit der hiermit offenbarten Lehre zum technischen Handeln in der Lage, andere geeignete Zeitpunkte für das Öffnen und Schliessen der Nadel 10 zu finden, um den technischen Effekt zu erzielen, dass ein Teil der Schicht abgetrennt bzw. abgeschält wird. Zudem ist der Fachmann in der Lage, die weiteren spritztechnischen Parameter wie Temperatur, Fliessgeschwindigkeit, Druck usw. entsprechend den Erfordernissen zu wählen. Alle diese Einstellungsparameter, welche zur Erzielung des vorhin genannten technischen Effektes führen, sind von dieser Offenbarung umfasst.

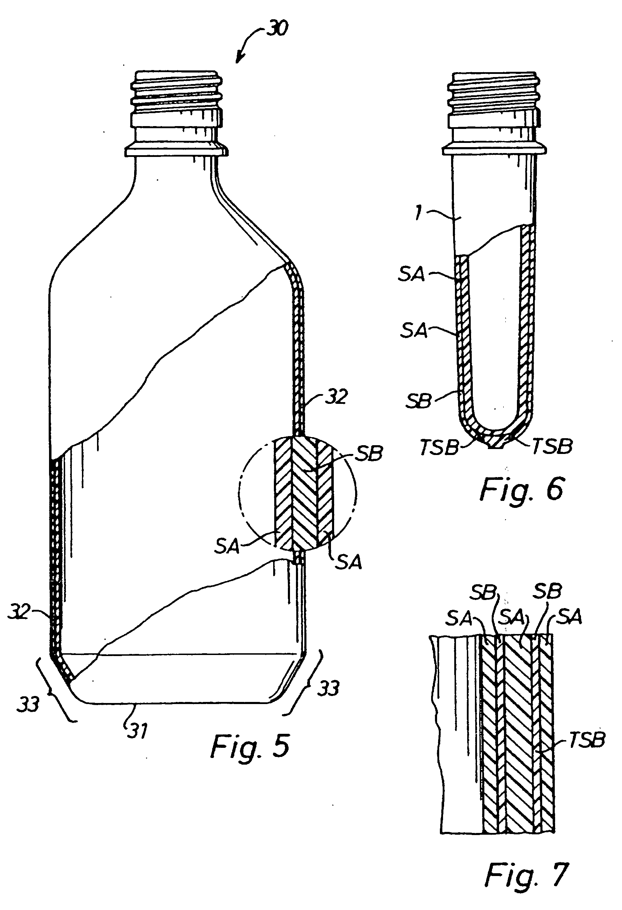

Fig. 6 zeigt eine Seitenansicht des gesamten Vorformlings 1, welcher in Fig. 3c nur ausschnittweise dargestellt ist. Der Vorformling 1 ist als Drei-Fünf-Schichten Vorformling ausgestaltet und weist eine Schicht SB bestehend aus der B-Komponente auf, welche beidseitig von einer Schicht SA bestehend aus der A-Komponente umgeben ist. Ebenfalls ersichtlich sind die im Übergangsbereich des Vorformlings 1 angeordneten Teilschichten.

Die in Fig. 5 dargestellte Kunststoffflasche 30 umfasst einen Flaschenboden 31, eine Seitenwand 32 sowie einen dazwischen angeordneten Übergangsbereich 33. Die Seitenwand 32 weist, wie vergrössert dargestellt, einen Dreischichten-Aufbau bestehend aus der Schichtfolge SA, SB, SA auf. Die Teilschichten TSB sind vorzugsweise derart im Vorformling 1 angeordnet, dass nach dem Streckblasen des Vorformlings sich diese Teilschichten TSB im Übergangsbereich 33 der Kunststoffflasche 30 befinden und dort, wie in Fig. 7 vergrössert dargestellt, einen Fünfschichtenaufbau ausbilden, mit einer Schichtfolge SA, SB, SA, SB, SA. Die abgesplittete Teilschicht TSB ist in der Regel wesentlich dünner als die Schicht SB, von welcher die Teilschicht TSB abgesplittet wurde. Dieser Aspekt ist in Fig. 7 nicht dargestellt.

Die Vorteile des erfindungsgemäss ausgestalteten Vorformlings sind dem Fachmann unmittelbar ersichtlich und insbesondere darin zu sehen, dass die Dicke der Sperrschicht im Bodenbereich durch geeignete Einstellung der Spritzzyklusparameter variiert werden kann. Ein wesentlicher Vorteil besteht in der verbesserten Haftung, insbesondere durch eine erhöhte Adhäsion und eine formschlüssige Verbindung, zwischen benachbarten Schichten.

## Patentansprüche

1. Mehrschichtiger Vorformling (1) für die Herstellung von Kunststoffbehältern, insbesondere Kunststoffflaschen, mit einem Bodenbereich (B), einem Mantelbereich (M) und einem zwischen Bodenbereich (B) und Mantelbereich (M) liegenden Übergangsbereich (G), welcher Vorformling (1) eine gesplittete Innenschicht (SB) aufweist, **dadurch gekennzeichnet, dass** diese Innenschicht im Bodenbereich (B) abgetragen ist, im übergangsbereich (G) eine abgesplittete Teilschicht (TSB) aufweist und im Mantelbereich (M) ungesplittet ist, und dass die abgesplittete Teilschicht (TSB) nur im Übergangsbereich (G) angeordnet ist.

2. Vorformling nach Anspruch 1, **dadurch gekennzeichnet, dass** dieser im Bodenbereich dreischichtig ist, im Übergangsbereich fünfschichtig ist und im Mantelbereich dreischichtig ist.

3. Vorformling nach Anspruch 1, **dadurch gekennzeichnet, dass** die abgesplittete Teilschicht im übergangsbereich eine unregelmässige Form aufweist.

4. Vorformling nach Anspruch 3, **dadurch gekennzeichnet, dass** die abgesplittete Teilschicht im Übergangsbereich eine krausartig gewellte Form aufweist.

5. Vorformling nach Anspruch 1, **dadurch gekennzeichnet, dass** die Teilschicht (TSB) eine Dicke zwischen 50 µm und 500 µm aufweist.

6. Vorformling nach einem der vorhergehenden Ansprüche, **dadurch gekennzeichnet, dass** die Innenschicht, zur Bildung einer Sperrschicht, aus PEN, Nylon, EVOH oder einem Polyamid besteht.

7. Vorformling nach Anspruch 1, **dadurch gekennzeichnet, dass** die Innenschicht im Mantelbereich eine höhere Dicke aufweist als im Übergangs- und/oder im Bodenbereich.

8. Verfahren zum Herstellen eines mehrschichtigen Vorformlings (1) mittels einer Spritzgiessvorrichtung, umfassend die Verfahrensschritte:
- Bereitstellen einer Spritzgiessform (2) mit einem Kern (3) und einem den Kern umgebenden Formraum (4), sowie einer Spritzgiessdüse (5),
- Bereitstellen einer A-Komponente aus thermoplastischem Material zur Bildung einer äusseren Schicht (SA) des Vorformlings (1),
- Bereitstellen einer B-Komponente aus thermoplastischem Material zur Bildung einer Innenschicht (SB) des Vorformlings (1),
- Einspritzen der A-Komponente in den Formraum (4) bis zu einer Teilfüllung, und/oder
- Einspritzen der A-Komponente und der B-Komponente in den Formraum (4),
**dadurch gekennzeichnet, dass** in einem nächsten Verfahrensschritt nochmals die A-Komponente derart eingebracht wird, dass im Bodenbereich ein Teil der Innenschicht (SB) derart abgetragen wird, dass nur in einem zwischen dem Bodenbereich (B) und dem Mantelbereich (M) angeordneten Übergangsbereich (G) die Innenschicht unter Ausbildung einer Teilschicht gesplittet wird.

9. Verfahren nach Anspruch 8, **dadurch gekennzeichnet, dass**, zur Bildung einer formschlüssigen Verbindung zwischen den einzelnen Schichten, die A-Komponente derart eingebracht wird, dass dadurch eine unregelmässige Gestaltung der Teilschicht erzeugt wird.

## Claims

1. Multiple layer preform (1) for the production of plastic containers, especially plastic bottles, having a base region (B), a casing region (M) and a transition region (G) lying between the base region (B) and the casing region (M), said preform (1) having a split inner layer (SB), wherein this inner layer is removed the base region (B), has a split away partial layer (TSB) in the transition region (G) and is not split in the casing region (M), and the split away partial layer (TSB) is arranged only in the transition region (G).

2. A preform according to claim 1, wherein the base region consists of three layers, the transition region consists of five layers and the casing region consists of three layers.

3. A preform according to claim 1, wherein the split away partial layer in the transition region possesses an irregular shape.

4. A preform according to claim 3, wherein the split away partial layer in the transition region possesses a crumpled, corrugated shape.

5. A preform according to claim 1, wherein the partial layer (TSB) has a thickness between 50µm and 500µm.

6. A preform according to one of the previous claims, wherein the inner layer is composed of PEN, Nylon, EVOH or a polyamide to form a barrier layer.

7. A preform according to claim 1, wherein the inner layer exhibits a higher thickness in the casing region than in the transition and/or in the base region.

8. A method for producing a multiple layer preform (1) using an injection moulding device and including the process steps:
- Providing an injection mould (2) having a core (3) and a moulding cavity (4) surrounding the core, as well as an injection nozzle (5),
- Providing an A-component of a thermoplastic material to form an outer layer (SA) of the preform (1),
- Providing a B-component of a thermoplastic material to form an inner layer (SB) of the preform (1),
- Injecting the A-component into the mould cavity (4) up to a partial filling, and / or
- Injecting the A-component and the B-component into the mould cavity (4), wherein, in a next step, the A-component is introduced again in such a way, that in the base region a part of the inner layer (SB) is removed n such a way that the inner layer is split to form a partial layer only in a transition region (G) arranged between the base region (B) and the casing region (M).

9. A method according to claim 8, wherein, in order to form a form-locking connection between the individual layers, the A-component is introduced in such a way, that an irregular shape of the partial layer thus caused.

## Revendications

1. Ebauche (1) stratifiée pour produire des récipients en matière synthétique, notamment des bouteilles en matière synthétique présentant une zone de fond (B), une zone d'enveloppe (M) et une zone de transition (G) située entre la zone de fond (B) et la zone d'enveloppe (M), zone de transition (G) dont l'ébauche (1) comporte une couche intérieure (SB) fractionnée, **caractérisée en ce que** cette couche intérieure est aplanie dans la zone de fond (B), qu'elle comporte une sous-couche (TSB) fragmentée dans la zone de transition (G) et qu'elle est fragmentée dans la zone d'enveloppe (M) et **en ce que** la sous-couche (TSB) fragmentée n'est disposée que dans la zone de transition (G).

2. Ebauche selon la revendication 1, **caractérisée en ce que** celle-ci est composée de trois couches dans la zone de fond, de cinq couches dans la zone de transition et de trois couches dans la zone d'enveloppe.

3. Ebauche selon la revendication 1, **caractérisée en ce que** la sous-couche fractionnée comporte une forme irrégulière dans la zone de transition.

4. Ebauche selon la revendication 3, **caractérisée en ce que** la sous-couche fractionnée comporte une forme ondulée et comme crépue dans la zone de transition.

5. Ebauche selon la revendication 1, **caractérisée en ce que** la sous-couche (TSB) comporte une épaisseur comprise entre 50 µm et 500 µm.

6. Ebauche selon l'une quelconque des revendications précédentes, **caractérisée en ce que** la couche intérieure est en PEN, en nylon, en EVOH ou en polyamide pour former une couche d'arrêt.

7. Ebauche selon la revendication 1, **caractérisée en ce que** la couche intérieure comporte une épaisseur plus importante dans la zone d'enveloppe que dans la zone de transition et/ou de fond.

8. Procédé de production d'une ébauche (1) stratifiée au moyen d'un dispositif d'injection. comprenant les étapes opérationnelles suivantes :
- préparation d'un moule d'injection (2) présentant un noyau (3) et une cavité de moule (4) entourant le noyau ainsi qu'un injecteur (5) ;
- préparation des composants A en matière thermoplastique pour former une couche (SA) extérieure de l'ébauche (1) ;
- préparation des composants B en matière thermoplastique pour former une couche intérieure (SB) de l'ébauche (1) ;
- injection des composants A dans la cavité de moule (4) jusqu'à son remplissage partiel ; et/ou
- injection des composants A et des composants B dans la cavité de moule (4),
**caractérisé en ce que** lors d'une étape opérationnelle suivante, les composants A sont encore une fois amenés de telle sorte que dans la zone de fond, une partie de la couche intérieure (SB) est aplanie de manière à ce que la couche intérieure soit fragmentée lors de la formation d'une sous-couche, uniquement dans une zone de transition (G) disposée entre la zone de fond (B) et la zone d'enveloppe (M).

9. Procédé selon la revendication 8, **caractérisé en ce que** pour former une liaison par conjugaison de forme entre les différentes couches, les composants A sont amenés de telle sorte qu'il en résulte une configuration irrégulière de la sous-couche.
